# EUROPEAN PATENT APPLICATION

(11) **EP 4 052 581 A1**
(43) Date of publication of application: **07.09.2022**
(21) Application number: 21160492.1
(22) Date of filing: 03.03.2021
(51) Int. Cl.: A21D 2/26, C12N 9/42, A21D 13/047, A21D 13/066

(54) **USE OF GH12 CELLULASES IN SPELT, OAT, BARLEY, AND / OR MILLET BAKING**

(71) Applicant: AB Enzymes GmbH, 64293 Darmstadt (DE)
(72) Inventor: FISCHER, Felix, 64293 Darmstadt (DE); Haarmann, Thomas, 64293 Darmstadt (DE); Van Genugten, Bernard, 64293 Darmstadt (DE)
(74) Representative: Hiebl, Inge Elisabeth

(57) **Abstract**

The invention relates to the use of a composition comprising an effective amount of at least one polypeptide having GH12 cellulase activity optionally together with conventionally used baking additives for improving at least one property of a dough comprising at least one flour selected from spelt, oat, barley, and millet flour, or a combination thereof and/or of a bakery product prepared from said dough as well as to a method of preparing a bakery product based on spelt, oat, barley, and / or millet having at least one improved property, said method comprising (i) providing a dough that has been added an effective amount of at least one polypeptide having GH12 cellulase activity or a composition comprising at least one polypeptide having GH12 cellulase activity optionally together with conventionally used baking additives, and at least one flour selected spelt, oat, barley, and / or millet flour or a combination thereof, (ii) baking the dough for a time and temperature sufficient to yield the bakery product as well as to a baking enzyme composition for preparing spelt, oat, barley, and / or millet based bakery products comprising a polypeptide having a GH12 cellulase activity optionally together with one or more dough(s) or bakery product additives.

## Description

### Field of the invention

The present invention relates to the use of GH12 cellulases for improving doughs and/or bakery products based on spelt, oat, barley, and / or millet as well as to a method of preparing a dough and/or a bakery product based on spelt, oat, barley, and / or millet by the use of a family GH12 cellulase. Moreover, the invention relates to a spelt, oat, barley, and / or millet bread-improving or spelt, oat, barley, and / or millet dough-improving composition comprising a family GH12 cellulase together with conventionally used baking additives.

### Background of the invention

Cellulase enzymes are amongst the most widely used enzymes in industry. Generally they are applied in textile industry, detergent industry, pulp and paper industry, feed and food industry, including baking.

The known enzymes responsible for the hydrolysis of the cellulose backbone are classified into enzyme families based on sequence similarity (www.cazy.org). The enzymes with cellulase activity have been described in a number of Glycoside Hydrolase families, the most well-known of which are (GH) 5, 7, 12 and 45. Enzymes within a family share some characteristics such as 3D structure and usually share the same reaction mechanism, but they may vary in substrate specificity.

Cellulase enzymes are well known to improve dough properties in certain bread recipes, mainly in wheat breadmaking. It is well known in the art that some particular cellulase enzymes can contribute to maintain a dry dough surface to improve handling of the dough.

Cellulases comprise a catalytic domain/core (CD) expressing cellulase activity. In addition to the catalytic domain, the cellulase molecule may comprise one or more cellulose binding domains (CBDs), also named as carbohydrate binding domains/modules (CBD/CBM), which can be located either at the N- or C-terminus of the catalytic domain. CBDs have carbohydrate-binding activity and they facilitate the enzymatic action on solid substrates. The catalytic core and the CBD are typically connected via a flexible and highly glycosylated linker region (see for example WO 2010/076387).

WO 2016/026850 discloses the use of a GH5 xylanase and a xylanase selected from the group consisting of GH8, GH10 and GH11 in a dough-based product. Said dough may comprise flour derived from any cereal grain including wheat, barley, rye, oat, corn, sorghum, rice and millet and, in particular, wheat and/or corn.

WO 2004/018662 corresponding to EP 03792367.9 discloses new (hemi-) cellulases and their use in baking. No specific effect of said cellulases on rye-based bakery products is disclosed.

The preparation of spelt, oat, barley, and / or millet mixed flour or single flour bread is determined chiefly by the properties of the spelt, oat, barley, and / or millet flour, requiring a specialized process. Doughs based on spelt, oat, barley, and / or millet flour can be characterised by reduced elasticity, higher stickiness, lower firmness and lower form stability. Each of these properties are linearly proportional to the amount of spelt, oat, barley, and / or millet flour used in the spelt, oat, barley, and / or millet flour mixture. It can be said that the spelt, oat, barley, and / or millet mixed dough is easier to handle the higher the proportion of an additional flour, preferably wheat flour or rye flour.

The specific properties of dough comprising any of spelt, oat, barley, and / or millet flour or mixtures thereof can be linked to the lower gluten content of spelt, oat, barley, and / or millet flour, in industrial settings the properties of the dough are typically improved by adding purified gluten as an additive.

It is generally known in the art that enzymatic methods to improve doughs in spelt, oat, barley, and / or millet/wheat flour are very limited, especially since enzymes that generally improve a specific deficit of wheat flour do not show the same effect in preparation of doughs from spelt, oat, barley, and / or millet flour. It is undisputed that enzymes well known for improving wheat bread properties such as bread volume, dough stability, crumb texture and dough handling cannot be applied in spelt, oat, barley, and / or millet-containing doughs to equal effect or even at all depending on the specific type of enzyme.

Although the composition and biochemical properties of spelt, oat, barley, and / or millet flour are well characterised, there is a relatively small amount of information regarding the effect of specific types of enzymes on the constituents of spelt, oat, barley, and / or millet flour and the modifications in the spelt, oat, barley, and / or millet flour macromolecules necessary to obtain improved dough handling properties.

Hence, there is a need in the art for baking aids to improve the properties of spelt, oat, barley, and / or millet-based doughs and spelt, oat, barley, and / or millet-based bakery products. Hence, it is an object of the present invention to provide a baking aid being suitable to improve the properties of a dough based on spelt, oat, barley, and / or millet single or mixed flour and/or the baked product prepared therefrom. The baking aid is to improve any relevant property of a dough and/or a product obtained from said dough, particularly of a baked product, which is to be improved by the action of the baking aid according to the invention.

### Summary of the invention

The invention provides the use of a composition comprising an effective amount of at least one polypeptide having GH12 cellulase activity optionally together with conventionally used baking additives for improving at least one property of a dough comprising least one flour selected from spelt, oat, barley, and millet, or a combination thereof and/or of a bakery product prepared from said dough.

In a second aspect, the invention provides a method of preparing a bakery product based on a flour selected from spelt, oat, barley, and millet or a combination thereof having at least one improved property, said method comprising (i) providing a dough that has been added an effective amount of at least one polypeptide having GH12 cellulase activity or a composition comprising at least one polypeptide having GH12 cellulase activity optionally together with conventionally used baking additives, and comprising at least one flour selected from spelt, oat, barley, and millet ,or a combination thereof, (ii) baking the dough for a time and temperature sufficient to yield the bakery product.

Still further, the invention provides a baking enzyme composition for preparing spelt, oat, barley, and / or millet-based bakery products comprising a polypeptide having a GH12 cellulase activity optionally together with one or more dough or bakery product additives.

### Brief description of the figures

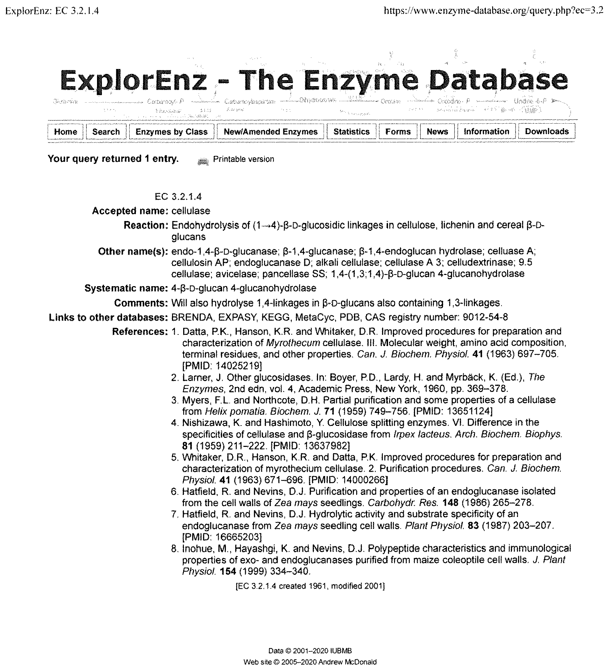

Figure 1 shows the content of https://www.enzyme-database.org/query.php?ec=3.2.1.4

### Detailed disclosure of the invention

The present invention generally relates to the use of a GH12 cellulase for improving at least one property of a dough comprising at least one flour selected from spelt, oat, barley, and millet, or a combination thereof and/or of a bakery product prepared from said dough. As outlined above, the prior art mentions various approaches to improve the properties of doughs and/or bakery products by use of various enzymes. However, none of the prior art references discloses the use of GH12-family enzymes for improving the properties of doughs and/or bakery products, let alone for improving the properties of spelt, oat, barley, and / or millet-based doughs and/or spelt, oat, barley, and / or millet-based bakery products. Comprehensive studies characterising the functionality of GH12 cellulases on well characterised and pure substrates have been done (Sandgren, M., Stahlberg, J., & Mitchinson, C. (2005)), Structural and biochemical studies of GH family 12 cellulases: improved thermal stability, and ligand complexes. Progress in biophysics and molecular biology, 89(3), 246-291). These studies show that GH12 cellulases have specific requirements with respect to the composition of the substrate, different from other common cellulase families such as GH5, GH7 or GH45 cellulases (E. Vlasenko, M. Schülein, J. Cherry, F. Xu (2010). Substrate specificity of family 5, 6, 7, 9, 12, and 45 endoglucanases. Bioresource Technology, 101, 2405-2411). The reason for these differences in specificity is thought to be due to the three dimensional structure of the enzyme, which is directly related to the amino acid sequence. Up until now, the relation of GH12 enzymes to the substrate in different grains used for breadmaking has not been well documented.

It was therefore surprising that a polypeptide having GH12 cellulase activity can advantageously be used to improve the properties of a spelt, oat, barley, and / or millet-based dough and/or bakery products obtained from said dough. An improved property of a spelt, oat, barley, and / or millet-based dough and/or spelt, oat, barley, and / or millet-based bakery product denotes any property of a dough and/or a product obtained from the dough, particularly a baked product, which is improved by the action of a polypeptide having GH12 cellulase activity according to the invention relative to a dough or product in which the polypeptide having GH12 cellulase activity is not incorporated. The improved property may include, but is not limited to, increased strength of the dough, increased elasticity of the dough, increased stability of the dough, reduced stickiness of the dough and improved extensibility of the dough, improved flavour of the baked product, improved anti-staling of the baked product, improved height-to-width ratio of the final bread, improved crumb structure, improved elasticity and improved softness of the dough. The improved property may be determined by comparison of a dough and/or a baked product prepared with and without addition of a polypeptide having GH12 cellulase activity according to the invention in accordance with methods which are described below or are known in the art. Organoleptic qualities may be evaluated using procedures well established in the baking industry and may include, for example, the use of a panel of trained taste testers.

The term "increased strength of the dough" is defined herein as the property of a dough that generally has more elastic properties and/or requires more work input to mould and shape. The term "increased elasticity of the dough" as defined herein is the property of a dough, which has a higher tendency to regain its original shape after being subjected to a certain physical strain. The term "increased stability of the dough" is defined herein as the property of the dough that is less susceptible to mechanical abuse, thus better maintaining its shape and volume. The term "reduced stickiness of the dough" is to denote the property of a dough that has less tendency to adhere to surfaces, e.g. in the dough-production machinery, and is either evaluated by the skilled test baker or measured by the use of a texture analyser as known in the art. The term "improved extensibility of a dough" is to denote a dough that can be subjected to an increased strain or stretching without rupture. The term "improved machinability of the dough" is defined herein as the property of a dough that is generally less sticky and/or more firm and/or more elastic. The term "increased volume of the baked product" is measured as the specific volume of a given loaf of a bread (volume/weight) determined typically by the traditional rapeseed displacement method. The term "improved crumb structure of the baked product" is defined herein as the property of the baked product with finer and/or thinner cell walls in the crumb and/or more uniform/homogenous distribution of cells in the crumb and is usually evaluated empirically by the skilled tester.

The term "improved softness of the baked product" is the opposite of firmness and is defined herein as the property of a baked product that is more easily compressed and is evaluated empirically by the skilled test baker or measured by the use of a texture analyser as known in the art. The term "improved flavour of the baked product" is evaluated by a trained test panel. The term "improved anti-staling of the baked product" is defined herein as the properties of the baked product that have a reduced rate of deterioration of quality parameters, e.g. softness and/or elasticity during storage.

According to the invention, a polypeptide having GH12 cellulase activity is used for improving at least one property of a dough comprising at least one flour selected from spelt, oat, barley, and millet, or a combination thereof and/or a baked product therefrom. Preferably, the use of a polypeptide having GH12 cellulase activity improves at least one property both of a spelt, oat, barley, and / or millet-based dough and of a baked product therefrom. Preferably said property is selected from the stability, the stickiness and the softness of the dough and/or the shape, the crumb structure and the height/width ratio of the bakery product.

A polypeptide having GH12 cellulase activity is to denote a polypeptide belonging to the glycoside hydrolases of family 12 and having endo-β-1,4-glucanase (EC 3.2.1.4) activity. A cellulase is an enzyme protein that catalyses the endo-hydrolases of (1->4)-beta-D-glucosidic linkages in cellulose, lichenin and cereal beta-D-glucans (EC 3.2.1.4) (see: https://www.enzyme-database.org/query.php?ec=3.2.1.4(enclosed as Figure 1)).Corresponding enzymes are known in the art. A corresponding enzyme is, for example, described in WO 2004/018662 (corresponding to EP 03 792 367.9). Said document mentions the use of said enzyme in improving properties of a dough and/or a baked product but does not specifically mention the improvement of spelt, oat, barley, and / or millet-based doughs or baked products. The polypeptide having GH12 cellulase activity may be derived from any organism, for example selected from the group consisting of *Acremonium, Aspergillus, Aureobasidium, Bjerkandera, Ceriporiopsis, Chrysosporium, Coprinus, Coriolus, Cryptococcus, Filibasidium, Fusarium, Humicola, Magnaporthe, Mucor, Myceliophthora, Neocallimastix, Neurospora, Paecilomyces, Penicillium, Phanerochaete, Phlebia, Piromyces, Pleurotus, Schizophyllum, Streptomyces, Talaromyces, Thermoascus, Thielavia, Tolypocladium, Trametes, Trichoderma, Hyprocrea jecorina, Trichoderma reesei, Trichoderma viride, Trichoderma harzianum, Aspergillus niger, Aspergillus oryzae, Humicola insolens, Humicola grisea, Streptomyces sp., Streptomyces violaceoruber, Bacillus licheniformis, Bacillus amyloliquefaciens, Bacillus pumilus, Bacillus sp, Thermotoga maritima, Xanthomonas, Clostridium, Actinoplanes, Proteus, Erwinia, Shigella, Haemophilus, Streptococcus, Salmonella, Pseudomonas, Rhizobium, Agrobacterium, or Vibrio.* The organisms may contain or express one or more genes coding for polypeptides having GH12 cellulase activity. Said multiple forms are usually denoted as type 1, type 2 etc. enzymes.

Polypeptides having GH12 cellulase activity are well-known in the art and said polypeptides may be used as such or variants of said polypeptides may be used which have, for example, single or multiple amino acid substitutions, deletions and/or insertions, provided that they have the GH12 cellulase activity. Moreover, hybrid polypeptides of said GH12 cellulases may be used in which a region of a GH12 cellulase is used at the N terminus or the C terminus of a region of another polypeptide, provided that the GH12 cellulase activity is still maintained. There are various subtypes of the GH12 cellulase peptides which may also be used and which are referred to in the following. The following polypeptides having GH12 cellulase activity are preferably used according to the present invention. These polypeptides belong to the glycosides hydrolases of family 12 as defined above, have GH12 cellulase activity but vary in their sequences. These polypeptides are referred to as GH12 type 1 to 5 or alternatively as GH12 molecules 1 to 5.

These are the following polypeptides having GH12 cellulase activity selected from the following cellulases having or comprising the respective sequence: GH12 Type 1 (SEQ ID NO:1 / with signal peptide or SEQ ID NO:10 without signal peptide), GH12 Type 2 (SEQ ID NO:2 / with signal peptide or SEQ ID NO:3 / without signal peptide, UniProt Ref. O74705), GH12 Type 3 (SEQ ID NO4 / with signal peptide or SEQ ID NO:5 / without signal peptide, GenBank Ref. CRL09147), GH12 Type 4 (SEQ ID NO:6 / with signal peptide or SEQ ID NO:7 / without signal peptide, NCBI Reference sequence WP_004081891), GH12 Type 5 (SEQ ID NO:8 / with signal peptide or SEQ ID NO:9 / without signal peptide, NCBI Reference sequence XP_006967891) or a polypeptide having GH12 cellulase activity and having at least 60%, preferably at least 70%, more preferably at least 80%, more preferably at least 90%, still more preferably at least 95%, still more preferably at least 98% sequence identity to any of SEQ ID NOS:1 to 10. The above preferred polypeptides having GH12 cellulase activity may either be used singly or in a mixture of at least two of said cellulases. Functional equivalents of said sequences may also be used such as the above sequence having mutations, substitutions, deletions and/or insertions, provided they have the claimed GH12 cellulase activity. Moreover, the above preferred polypeptides may be contained in a larger molecule such as a fusion protein, provided that they still have the claimed activity, i.e. polypeptides having GH12 cellulase activity and comprising any of SEQ ID NOS:1 to 10 may also be used according to the invention. Further functional equivalents of said proteins can also be identified by using the above sequences to screen combinatorial libraries.

The most preferred polypeptide having GH12 cellulase activity for the use of the invention is the GH12 type 2 molecule.

The degree of sequence identity is preferably determined in such a way that the number of residues of the shorter sequence which is involved in the comparison and has a "corresponding" counterpart in the other sequence is determined. For the purposes of the present invention the identity is preferably determined in the usual manner by using the usual algorithms. Similar, preferably identical sequence counterparts can be determined according to the invention as homologue sequences by means of known computer programs. An example of such a program is the program Clone Manager Suite, which includes the program part Align Plus and is distributed by Scientific & Educational Software, Durham, NC, U.S.A. A comparison of two DNA sequences or amino acid sequences as defined above is thereby carried out under the option local alignment either according to the FastScan - MaxScore method or according to the Needleman-Wunsch method, keeping the default values. The program version "Clone Manager 7 Align Plus 5" with the functions "Compare Two Sequences/Local Fast Scan-Max Score/Compare DNA sequences" or for amino acids "Compare Two Sequences/Global/Compare sequences as Amino Acids" was particularly used to calculate the identity according to the invention. The algorithms made available from the following sources were thereby used: Hirschberg, D.S. 1975. A linear space algorithm for computing maximal common subsequences. Commun Assoc Comput Mach 18:341-343; Myers, E.W. and W. Miller. 1988. Optimal alignments in linear space. CABIOS 4:1, 11-17; Chao, K-M, W.R. Pearson and W. Miller. 1992. Aligning two sequences within a specified diagonal band. CABIOS 8:5, 481-487.

The production of such variants is generally known in the state of the art. For example, amino acid sequence variants of the polypeptides may be produced by mutation in the DNA. Processes for mutagenesis and changes in the nucleotide sequence are well known in the state of the art (cf. for example Tomic et al. NAR, 18:1656 (1990), Giebel and Sprtiz NAR, 18:4947 (1990)).

Details on appropriate amino acid substitutions which do not negatively influence the biological activity of the protein of interest can be found in the model by Day-hoff et al., Atlas of Protein Sequence and Structure, Natl. Biomed. Res. Found., Washington, D.C. (1978). Conservative substitutions such as the substitution of an amino acid by another one with similar properties are preferred. These substitutions may be divided into two main groups with altogether four subgroups, and a substitution in each subgroup is referred to as conservative substitution, which does preferably not influence the activity or the folding of the protein.

| | | |
|---|---|---|
| aliphatic | non-polar | G A P |
| | | I L V |
| | polar and uncharged | C S T M N Q |
| | polar and charged | D E |
| | | K R |
| aromatic | | H F W Y |

The polypeptide having GH12 cellulase activity is added to any mixture of dough ingredients, to the dough or to any of the ingredients to be included in the dough, i.e. it may be added in any step of the dough preparation and may be added in one, two or more steps, where appropriate. Usually, the polypeptide having GH12 cellulase activity is added in an amount corresponding to 0.001 to 500 mg enzyme protein per kilogram of flour, preferably 0.01 to 100 mg enzyme protein per kilogram of flour, preferably 0.05-50 mg enzyme protein per kilogram of flour, more preferably 0.05-20 mg enzyme protein per kilogram of flour, 2.5 to 15 mg enzyme protein per kilogram of flour, 0.1-10 mg enzyme protein per kilogram of flour, still more preferably 0.1-5 mg enzyme protein per kilogram of flour, even still more preferably 0.5-2.5 mg protein per kilogram of flour.

A particular dosage may be applied if selectively either the properties stickiness and softness of the dough or the baking properties volume and height/width ratio of the bakery product are to be improved. For the improvement of the properties of the dough (stickiness and softness) a preferred dosage of the GH12 cellulase is 0.001 to 2.5 mg enzyme protein per kilogram of flour, preferably 0.001 to 1 mg enzyme protein per kilogram of flour, more preferably 0.001 to 0.5 mg enzyme protein per kilogram of flour, and still more preferably 0.01 to 0.5 mg enzyme protein per kilogram of flour. If the properties volume and height/width ratio of the bakery product are to improve a preferred dosage of GH12 cellulase is 1 to 500 mg enzyme protein per kilogram of flour, preferably 1 to 100 mg enzyme protein per kilogram of flour, more preferably 1 to 50 mg enzyme protein per kilogram of flour, still more preferably 5 to 50 mg enzyme protein per kilogram of flour.

The most suitable dosage of the polypeptide having GH12 activity can easily be determined by a person skilled in the art on the basis of the present disclosure and in relation to the specific bread recipe. As evident from the examples, there may be slight differences in the preferred dosage depending on the type of a polypeptide having GH12 cellulase activity as used. A preferred dosage range for the above or any other Type 1 GH12 cellulase is 2.5 to 15 mg enzyme protein per kilogram of flour and a preferred dosage range of the above or any other Type 2 cellulase enzyme may vary between 0.05 and 20 mg enzyme protein per kilogram flour. The most suitable dosage of the polypeptide having GH12 cellulase activity is of course subject to the type/origin/batch etc. of the respective flour, but may easily be determined by a person skilled in the art.

A more preferred dosage range for the above or any other Type 1 GH12 cellulase is 2.5 to 7.5 mg enzyme at 50% to 100% percentage of a flour comprising at least one flour selected from spelt, oat, barley, and millet, or a combination thereof used in the recipe. A furthermore preferred dosage range for the above or any other Type 1 GH12 cellulase is 7.5 to 15 mg enzyme at 10% to 50% percentage of a flour comprising at least one flour selected from spelt, oat, barley, and millet,or a combination thereof used in the recipe. A more preferred dosage range for the above or any other Type 2 GH12 cellulase is 0.05 to 1.5 mg enzyme at 50% to 100% percentage of a flour comprising at least one flour selected from spelt, oat, barley, and millet, or a combination thereof used in the recipe. A more preferred dosage range for the above or any other Type 1 GH12 cellulase is 1.5 to 20 mg enzyme at 10% to 50% percentage of a flour comprising at least one flour selected from spelt, oat, barley, and millet,or a combination thereof used in the recipe.

The enzyme may be added as such or as a constituent of a dough-improving or a bread-improving composition, either to flour or other dough ingredients or directly to the mixture from which the dough is to be made. Further enzymes may be added in combination with a polypeptide having GH12 cellulase activity. Examples of such enzymes are further cellulases, a glycosyl transferase, in particular, 1-α-glucano-transferase or 4-α-glucano-transferase, a hemicellulase, for example a pentosanase such as xylanase, a lipase, an oxidase, for example a glucose oxidase, a peroxidase, a protease, a peptidase, a transglutaminase, and/or an amylolytic enzyme, in particular an amylolytic enzyme with α-1,4-endo-activity, a β-amylase, an amyloglucosidase, a maltogenic amylase, a cyclodextrine glucanotransferase and the like. The other enzyme components may be of any origin including mammalian and plant and preferably of microbial (including bacterial and fungal) origin. The enzymes as well as the polypeptide having GH12 cellulase activity may be obtained by conventional techniques used in the art.

The amylase may be fungal or bacterial, e.g., a maltogenic alpha-amylase from *B. stearothermophilus* or an alpha-amylase from *Bacillus,* e.g., *B*. *licheniformis* or *B. amyloliquefaciens,* a beta-amylase, e.g., from plant (e.g. soy bean) or from microbial sources (e.g. *Bacillus*)*,* or a fungal alpha-amylase, e.g. from *A. oryzae.*

Suitable commercial maltogenic alpha-amylases include NOVAMYL^{™} (available from Novozymes A/S) and VERON^{®} MAC (available from AB Enzymes GmbH). Suitable commercial fungal alpha-amylase compositions include, e.g., FUN-GAMYL 2500 SG^{™}, AMYL ULTRA SG^{™} (available from Novozymes A/S), VERON^{®} M4, VERON^{®} 1000, VERON^{®} AC, VERON^{®} BA, VERON^{®} (available from AB Enzymes GmbH).

The xylanase may be a fungal or bacterial xylanase, in particular an *Aspergillus niger* xylanase such as VERON^{®} 191S or *Bacillus subtilis* xylanase such as VERON^{®} RL (Available from AB Enzymes GmbH).

The glucose oxidase may be a fungal glucose oxidase, in particular an *Aspergillus* niger glucose oxidase (such as GLUZYME^{™}, available from Novozymes A/S, Denmark), VERON^{®} Oxibake-ST (available from AB Enzymes GmbH).

The protease may be from *Bacillus,* e.g., *B. subtilis, such as VERON^{®} P* (available from AB Enzymes GmbH).

The phospholipase may have phospholipase A1, A2, B, C, D or lysophospholipase activity; it may or may not have lipase activity. It may be of animal origin, e.g. from pancreas, snake venom or bee venom, or it may be of microbial origin, e.g. from filamentous fungi, yeast or bacteria, such as *Aspergillus* or *Fusarium,* e.g. *A. niger, A. oryzae* or *F. oxysporum.* A preferred lipase/phospholipase from *Fusarium oxysporum* is disclosed in WO 98/26057. Also, the variants described in WO 00/32758 may be used.

Suitable phospholipase compositions are VERON^{®} Hyperbake-ST (available from AB Enzymes GmbH).

Preferred enzymes to be combined with a GH12 cellulase are xylanases/endoxy-lanases, preferably in an amount of 0.1 to 20 mg enzyme protein/kg flour, alpha-amylases, preferably in an amount of 0.1 to 10 mg enzyme protein/kg flour, and multigenic amylases, preferably in an amount of 0.5 to 50 mg enzyme protein/kg flour.

The dough comprises at least one flour selected from spelt, oat, barley, and millet or a combination thereof . These flours may be used as a single flour or as a combination of two, three or all four of these flours. Variable combinations in various ratios of these flours may be used. The dough may also contain other flours such as wheat or rye. Advantageously the dough contains 10 to 100% flour comprising at least one flour selected from spelt, oat, barley, and millet, or a combination thereof. The terms "spelt, oat, barley, and / or millet-based dough" or "dough comprising spelt, oat, barley, and / or millet" are to refer to a mixture of flour and other ingredients which contain a gist of or more than 10% flour comprising at least one flour selected from spelt, oat, barley, and millet or a combination thereof, 20% flour comprising at least one flour selected from spelt, oat, barley, and millet or a combination thereof, 25% flour comprising at least one flour selected from spelt, oat, barley, and millet or a combination thereof, 30% flour comprising at least one flour selected from spelt, oat, barley, and millet or a combination thereof, 35% flour comprising at least one flour selected from spelt, oat, barley, and millet, or a combination thereof, 40% flour comprising at least one flour selected from spelt, oat, barley, and millet or a combination thereof, 45% flour comprising at least one flour selected from spelt, oat, barley, and millet or a combination thereof, preferably 50% flour comprising at least one flour selected from spelt, oat, barley, and millet, or a combination thereof, more preferably 60% flour comprising at least one flour selected from spelt, oat, barley, and millet or a combination thereof, more preferably 70%, still more preferably 80% flour comprising at least one flour selected from spelt, oat, barley, and millet or a combination thereof, still more preferably 90% flour comprising at least one flour selected from spelt, oat, barley, and millet or a combination thereof. The dough contains preferably 30 to 90% flour comprising at least one flour selected from spelt, oat, barley, and millet or a combination thereof, more preferably 40 to 90% flour comprising at least one flour selected from spelt, oat, barley, and millet or a combination thereof, still more preferably 50 to 90% flour comprising at least one flour selected from spelt, oat, barley, and millet or a combination thereof, still more preferably 60 to 90% flour comprising at least one flour selected from spelt, oat, barley, and millet or a combination thereof, still more preferably 70 to 90% flour comprising at least one flour selected from spelt, oat, barley, and millet or a combination thereof, more preferably 30 to 80% flour comprising at least one flour selected from spelt, oat, barley, and millet or a combination thereof, still more preferably 40 to 80% flour comprising at least one flour selected from spelt, oat, barley, and millet or a combination thereof, still more preferably 50 to 80% flour comprising at least one flour selected from spelt, oat, barley, and millet or a combination thereof, still more preferably 60 to 80% flour comprising at least one flour selected from spelt, oat, barley, and millet or a combination thereof, and more preferably 70 to 80% flour comprising at least one flour selected from spelt, oat, barley, and millet or a combination thereof. Most preferably, the dough contains 30 to 70%, most preferably 50 to 70% flour comprising at least one flour selected from spelt, oat, barley, and millet or a combination thereof. A preferred embodiment is also a dough containing 100% flour comprising at least one flour selected from spelt, oat, barley, and millet or a combination thereof.

The dough may be fresh, frozen or prebaked. The other flours comprised in the dough apart from the flour comprising at least one flour selected from spelt, oat, barley, and millet or a combination thereof may be of any cereal grain including wheat, rye, , emmer, triticale, , corn, sorghum or rice, in particular wheat and/or corn. The dough may also comprise other convention dough ingredients, for example proteins such as milk powder, sugar, gluten and soy, eggs (whole eggs, egg yolks or egg whites), an oxidant such as ascorbic acid, potassium bromate, potassium iodate, acyldicarbonamide or ammonium persulphate, an amino acid such as L-cystein, a sugar, a salt such as sodium chloride, calcium acetate, sodium sulphate or calcium sulphate. The dough may also comprise an emulsifier selected from the group consisting of diacetyl tartaric acid esters of monoglycerides, sodium stearyl lactylate, calcium stearyl lactylate, ethoxylated mono and diglycerides, polysorbates, succinolated monoglycerides and mixtures thereof. The dough may contain spelt, oat, barley, and / or millet-based or wheat-based sourdough, gums and hydrocolloids such as guar, xanthan or cellulose. Malt (active and inactive), yeast, and water.

Depending on the desired final product, the recipe may contain further ingredients conventionally used according to the desired bread or bakery product. Further ingredients may be, for example, spices, dried fruits, nuts, chocolate, colouring agents, aromatising agents, etc.

A baked product obtained from said dough is any product prepared from a dough either of a soft or a crisp character. Examples of baked products, whether of a white, light or dark type, which may be advantageously produced according to the present invention are spelt, oat, barley, and / or millet loaves, spelt, oat, barley, and / or millet buns, spelt, oat, barley, and / or millet rolls, whole-grain loaves, spelt, oat, barley, and / or millet pretzels or spelt, oat, barley, and / or millet pizza, crisp bread.

The handling of the dough and/or baking is performed in any suitable manner for the dough and/or baked product in question, typically including the steps of kneading the dough, subjecting the dough to one or more proofing treatments and baking the product under suitable conditions, i.e. at a suitable temperature and for a sufficient period of time. For example, the dough may be prepared by using a normal straight dough process, a sour dough process, an overnight dough process, a low-temperature and long-time fermentation method, a frozen dough method and the like.

Particularly preferred methods for preparing a bakery product based on spelt, oat, barley, and / or millet according to the invention are mixing the flour with water, yeast and other ingredients, where the enzyme is added to the flour directly or as component in a bread improver or sourdough. Preferably, the ingredients are mixed in a kneading machine until the dough is fully developed. After mixing the temperature is being measured and the dough gets evaluated by a professional baker on its properties which are, stickiness, elasticity, extensibility and softness. The dough is being covered with plastic to prevent the surface from drying out. The dough is being left 20 minutes for bench time. After resting, the dough is being scaled, shaped and put into a breadbasket. The dough is being proofed in a controlled environment for 45-75 minutes at 32°C and 80% relative humidity. After proofing the dough is being transferred into an oven and baked for 50-60 minutes at 260°C with steam and a falling temperature to 220°C. After baking, the fresh loaf is being left at ambient for cooling down. Final evaluation and volume measurement is being done when the bread reaches room temperature.

Preferred dough compositions are as follows: 10-100% spelt, oat, barley, and / or millet flour, 0-90% other grains, further containing water, yeast, possible other additives [as in the list above] and enzymes. Preferably the other grains are wheat and/or rye.

Preferred recipes are those as used in the examples of the invention in relation to the ingredients and to the added enzyme. The amount of the ingredients may vary and the respective products may also be prepared with other processes of a dough preparation and baking that are usual in the art. This means that the features of the recipe and the enzyme as used are not inextricably linked with the respective dough preparing or baking process as exemplified in the examples.

The present invention is further described by the following examples:

### Examples

### General Methods

### Methods for the preparation and evaluation of the properties of the dough and bakery products (baking and evaluation process):

### GENERAL PROCEDURE FOR MAKING THE BREADS

In the following a general outline of an exemplary procedure for making the breads is given.
1) Weighing all ingredients. Flours, salt, yeast, citric acid, gluten and other ingredients and the enzymes are added into a plastic bowl.
2) The ingredients are added to a spiral mixer Diosna SP12. The water temperature is adjusted to 34°C and added into the mixer. All ingredients are mixed at 50Hz for 6 minutes and 60Hz for 1 minute.
3) The dough is taken from the mixer with help of a plastic scraper and left to rest at room temperature for 20 minutes.
   During resting, the dough temperature is measured using a standard thermometer (Testo 926 with PT100) to make sure that each dough has the same temperature (a variation between doughs of 1°C is allowed). Dough temperature after mixing should be at 28-30°C.
   The dough is manually evaluated (see below). Each dough is divided into exactly 800 gr pieces using scales and added into a bowl for fermentation. The dough is fermented at 32°C and 80% relative humidity for 45 minutes and 60 minutes.
4) Afterwards, the dough is baked at 260°C for 60 minutes.
5) After the breads are cooled down, the volume is measured using a BVM 6630 (Perten Instruments). Final volume is the average of at least three breads.

### MANUAL DOUGH AND BREAD EVALUATION

Dough properties are evaluated directly after mixing, during the 20 minutes bench time and shaping. A scale of 1 to 10 indicates the dough properties, where dough 1 (reference) is given score 5 for all parameters and all other doughs are compared to dough 1. A higher number means that the described parameter is more or higher compared to the reference. A lower stickiness and softness is preferable and wanted which is represented by a lower number. The following properties of the bread are evaluated after baking.

| Parameter | Definition | Scale |
|---|---|---|
| Stickiness after mixing | Degree to which the dough sticks to the hands when dough is pressed by the palm of the hand, tested directly after removing dough from the mixer. | Less sticky 0 - 4 Same as control 5 More sticky 6 - 10 |
| Stickiness after resting | Degree to which the dough sticks to the hands when pressed by the palm of the hand, tested 5 to 10 minutes after removing the dough from the mixer | |
| Extensibility | The ability to stretch a dough by pulling a piece of dough on both ends without breaking | Less extensible 0 - 4 Same as control 5 More extensible 6 - 10 |
| Elasticity | The ability of a dough to return to its original shape after being pulled | Less elastic 0 - 4 Same as control 5 More elastic 6 - 10 |
| Softness | The amount of force needed to depress the surface of a dough piece | Less soft 0 - 4 Same as control 5 More soft 6 - 10 |
| Bread volume | Volume of a complete loaf as measured using volume scanner (Perten Instruments) | Measured in ml |
| Bread shape | The height versus width of a cross-section of bread | Just Round, Somewhat round, Round = higher height vs. width at equal volume compared to control |
| | | Normal = No change in height vs. width at equal volume compared to control |
| | | Just flat, Somewhat Flat, Flat = more width vs. hight at equal volume compared to control |

For the loaf shape the properties flat, somewhat flat, just flat, normal, just round, somewhat round and round are used.

### Example 1: Dough properties and bread volume of 50% oat dough using GH12 cellulase Type 2

A dosage range of GH12 cellulase Type 2 against no enzyme was tested. A bread was baked using the following recipe according to the described baking and evaluation process.

### RECIPE

50% Oat Flour
50% Wheat Flour

| *Ingredient* | *Amount (w*/*w on total flour)* |
|---|---|
| Water | 70% |
| Salt | 2% |
| Fresh yeast | 4% |
| | |
| Ascorbic acid | 50 ppm |

| | | | |
|---|---|---|---|
| GH12 cellulase Type 2 | Blank | 0,08 mg (EP/kg flour) | 4,3 mg (EP/kg flour) |
| Dough No. | 1 | 2 | 3 |
| Dough Consistency | | | |
| Stickiness after mixing | 5 | 4 | 5 |
| Stickiness after resting | 5 | 5 | 5 |
| Extensibility | 5 | 5 | 6 |
| Elasticity | 5 | 5 | 4 |
| Softness | 5 | 4 | 5 |
| Baking result | | | |
| Volume [ml] | 1733 | 1753 | 1924 |
| Standard Deviation [ml] | 49 | 20 | 41 |

Conclusion: The results show that a dosage of 0,08 mg EP (GH12 cellulase Type 2) /kg flour reduces the stickiness and softness of the oat / wheat flour dough compared to the reference oat / wheat flour dough. High dosage of 4,3 mg EP (GH12 cellulase Type 2) /kg flour significantly increases the volume of the baked bread.

### Example 2: Dough properties and bread volume of a 50% barley and 50% spelt flour dough using GH12 cellulase Type 2.

A dosage range of GH12 cellulase Type 2 against no enzyme was tested. A bread was baked using the following recipe according to the described baking and evaluation process.

### RECIPE

50% Barley Flour
50% Spelt Flour

| *Ingredient* | *Amount (w*/*w on total flour)* |
|---|---|
| Water | 75% |
| Salt | 2% |
| Fresh yeast | 2% |

| GH12 cellulase Type 2 | **Blank** | 0,017 mg (EP/kg flour) | 0,08 mg (EP/kg flour) | 4,3 mg (EP/kg flour) |
|---|---|---|---|---|
| Dough No. | 1 | 2 | 3 | 4 |
| Dough Consistency | | | | |
| Stickiness after mixing | 5 | 3 | 4 | 5 |
| Stickiness after resting | 5 | 4 | 4 | 5 |
| Extensibility | 5 | 5 | 6 | 6 |
| Elasticity | 5 | 5 | 5 | 4 |
| Softness | 5 | 4 | 5 | 5 |

| Baking Results | | | | |
|---|---|---|---|---|
| Volume [ml] | 881 | 874 | 899 | 986 |
| Standard Deviation [ml] | 7 | 8 | 5 | 11 |

Conclusion: The results show that a dosage range of 0,017 mg EP (GH12 cellulase Type 2) /kg flour to 0,08 mg EP (GH12 cellulase Type 2) /kg flour reduces the stickiness of the barley / spelt flour dough compared to the reference barley / spelt flour dough dough. High dosage of 4,3 mg EP (GH12 cellulase Type 2) /kg flour significantly increases the volume of the baked bread.

### Example 3: Dough properties of 100% oat dough using GH12 cellulase Type 2

A dosage range of GH12 cellulase Type 2 against no enzyme was tested. A bread was baked using the following recipe according to the described baking and evaluation process.

### RECIPE

100% Oat Flour

| *Ingredient* | *Amount (w*/*w on total flour)* |
|---|---|
| Water | 68% |
| Salt | 2% |
| Fresh yeast | 1,5% |

| GH12 cellulase Type 2 | **Blank** | **0,017 mg (EP/kg flour)** | **0,08 mg (EP/kg flour)** |
|---|---|---|---|
| Dough No. | 1 | 2 | 3 |

| Dough Consistency | | | |
|---|---|---|---|
| Stickiness after mixing | 5 | 3 | 4 |
| Stickiness after resting | 5 | 4 | 4 |
| Extensibility | 5 | 5 | 6 |
| Elasticity | 5 | 6 | 5 |
| Softness | 5 | 4 | 5 |

Conclusion: The results show that a dosage range of 0,017 mg EP (GH12 cellulase Type 2) /kg flour to 0,08 mg EP (GH12 cellulase Type 2) /kg flour reduces the stickiness of the oat flour dough compared to the reference oat flour dough.

## Claims

1. Use of a composition comprising an effective amount of at least one polypeptide having GH12 cellulase activity optionally together with conventionally used baking additives for improving at least one property of a dough comprising at least one flour selected from spelt, oat, barley, and millet, or a combination thereof and/or of a bakery product prepared from said dough.

2. The use of claim 1, wherein the property is selected from the stability, the stickiness, and the softness of the dough and/or, the shape, the crumb structure, and the height/width ratio of the bakery product.

3. The use of one of claims 1 or 2, wherein the polypeptide having GH12 cellulase activity is derived from *Acremonium, Aspergillus, Aureobasidium, Bjerkandera, Ceriporiopsis, Chrysosporium, Coprinus, Coriolus, Cryptococcus, Filibasidium, Fusarium, Humicola, Magnaporthe, Mucor, Myceliophthora, Neocallimastix, Neurospora, Paecilomyces, Penicillium, Phanerochaete, Phlebia, Piromyces, Pleurotus, Schizophyllum, Streptomyces, Talaromyces, Thermoascus, Thielavia, Tolypocladium, Trametes, Trichoderma, Hyprocrea jecorina, Trichoderma reesei, Trichoderma viride, Trichoderma harzianum, Aspergillus niger, Aspergillus oryzae, Humicola insolens, Humicola grisea, Streptomyces sp., Streptomyces violaceoruber, Bacillus licheniformis, Bacillus amyloliquefaciens, Bacillus pumilus, Bacillus sp, Thermotoga maritima, Xanthomonas, Clostridium, Actinoplanes, Proteus, Erwinia, Shigella, Haemophilus, Streptococcus, Salmonella, Pseudomonas, Rhizobium, Agrobacterium, or Vibrio.*

4. The use of one of claims 1 to 3, wherein the polypeptide having GH12 cellulase activity is GH12 Type 1 cellulase having or comprising SEQ ID NO:1 or NO:10, GH12 Type 2 cellulase having or comprising SEQ ID NO:2 or NO:3, GH12 Type 3 cellulase having or comprising SEQ ID NO:4 or NO:5, GH12 Type 4 cellulase having or comprising SEQ ID NO:6 or NO:7, GH12 Type 5 cellulase having or comprising SEQ ID NO:8 or NO:9 or a polypeptide having GH12 cellulase activity and having at least 60%, preferably 70%, more preferably at least 80%, more preferably at least 90%, still more preferably at least 95%, still more preferably at least 98% sequence identity to any of SEQ ID NOS:1 to 10, or a mixture of at least two of said cellulases.

5. The use of one of claims 1 to 4, wherein the composition further comprises an effective amount of at least one further enzyme selected from xylanase, endoxylanase, alpha-amylase or maltogenic amylase.

6. The use of one of claims 1 to 5, wherein the dough comprises at least 10%, preferably at least 35%, more preferably at least 50%, still more preferably at least 60%, still more preferably at least 80%, still more preferably 90%, still more preferably 100% flour comprising at least one flour selected from spelt, oat, barley, and millet, or a combination thereof.

7. The use of one of claims 1 to 6, wherein the polypeptide having GH12 cellulase activity is present in the dough in an amount of 0.001 to 500 mg, preferably 0.01 to 100mg, preferably 0.05 to 50 mg, preferably 0.05 to 20 mg, more preferably 2.5 to 15 mg, more preferably 0.1-10 mg, still more preferably 0.1-5 mg, still more preferably 0.5-2.5 mg enzyme protein per kg of flour.

8. The use of any of claims 1 to 7, wherein the bakery products are crusty bakery products, preferably spelt, oat, barley, and / or millet buns and loaves, whole-grain loaves, spelt, oat, barley, and / or millet rolls, spelt, oat, barley, and / or millet pretzels or spelt, oat, barley, and / or millet pizza.

9. A method of preparing a bakery product based on spelt, oat, barley, and / or millet having at least one improved property, said method comprising
i) providing a dough that has been added an effective amount of at least one polypeptide having GH12 cellulase activity or a composition comprising at least one polypeptide having GH12 cellulase activity optionally together with conventionally used baking additives, and a flour comprising at least one flour selected from spelt, oat, barley, and millet or a combination thereof,
ii) baking the dough for a time and temperature sufficient to yield the bakery product.

10. The method of claim 9, wherein the improved property is selected from the stability, the stickiness, and/or the softness of the dough and, the shape, the crumb structure, and the height/width ratio of the bakery product.

11. The method of one of claims 9 or 10, wherein the polypeptide having GH12 cellulase activity is derived from *Acremonium, Aspergillus, Aureobasidium, Bjerkandera, Ceriporiopsis, Chrysosporium, Coprinus, Coriolus, Cryptococcus, Filibasidium, Fusarium, Humicola, Magnaporthe, Mucor, Myceliophthora, Neocallimastix, Neurospora, Paecilomyces, Penicillium, Phanerochaete, Phlebia, Piromyces, Pleurotus, Schizophyllum, Streptomyces, Talaromyces, Thermoascus, Thielavia, Tolypocladium, Trametes, Trichoderma, Hyprocrea jecorina, Trichoderma reesei, Trichoderma viride, Trichoderma harzianum, Aspergillus niger, Aspergillus oryzae, Humicola insolens, Humicola grisea, Streptomyces sp., Streptomyces violaceoruber, Bacillus licheniformis, Bacillus amyloliquefaciens, Bacillus pumilus, Bacillus sp, Thermotoga maritima, Xanthomonas, Clostridium, Actinoplanes, Proteus, Erwinia, Shigella, Haemophilus, Streptococcus, Salmonella, Pseudomonas, Rhizobium, Agrobacterium, or Vibrio.*

12. The method of one of claims 9 to 11, wherein the polypeptide having GH12 cellulase activity is GH12 Type 1 cellulase having or comprising SEQ ID NO:1 or NO:10, GH12 Type 2 cellulase having or comprising SEQ ID NO:2 or NO:3, GH12 Type 3 cellulase having or comprising SEQ ID NO:4 or NO:5, GH12 Type 4 cellulase having or comprising SEQ ID NO:6 or NO:7, GH12 Type 5 cellulase having or comprising SEQ ID NO:8 or NO:9 or a polypeptide having GH12 cellulase activity and having at least 60%, preferably 70%, more preferably at least 80%, more preferably at least 90%, still more preferably at least 95%, still more preferably at least 98% sequence identity to any of SEQ ID NOS:1 to 10, or a mixture of at least two of said cellulases.

13. The method of one of claims 9 to 12, wherein the dough comprises an effective amount of at least one further enzyme selected from xylanase, endoxylanase, alpha amylase or maltogenic amylase.

14. The method of one of claims 9 to 13, wherein the dough comprises at least 10% , preferably at least 35%, more preferably at least 50%, still more preferably at least 60%, still more preferably at least 80%, still more preferably 90%, still more preferably 100% flour comprising at least one flour selected from spelt, oat, barley, and millet or a combination thereof.

15. The method of one of claims 9 to 14, wherein the polypeptide having GH12 cellulase activity has been added in an amount of 0.001 to 500 mg, preferably 0.01 to 100 mg, preferably 0.05 to 50 mg, preferably 0.05 to 20 mg, more preferably 2.5 to 15 mg, more preferably 0.1-10 mg, still more preferably 0.1-5 mg, still more preferably 0.5-2.5 mg enzyme protein per kg of flour.

16. The method of one of claims 9 to 15, wherein the bakery products are crusty bakery products, preferably spelt, oat, barley, and / or millet buns and loaves, whole-grain loaves, spelt, oat, barley, and / or millet rolls, spelt, oat, barley, and / or millet pretzels, or spelt, oat, barley, and / or millet pizza.

17. A baking enzyme composition for preparing spelt, oat, barley, and / or millet-based bakery products comprising a polypeptide having a GH12 cellulase activity optionally together with one or more dough(s) or bakery product additives.

18. The baking enzyme composition of claim 17 wherein the polypeptide having GH12 cellulase activity is GH12 Type 1 cellulase having or comprising SEQ ID NO:1 or NO:10, GH12 Type 2 cellulase having or comprising SEQ ID NO:2 or NO:3, GH12 Type 3 cellulase having or comprising SEQ ID NO:4 or NO:5, GH12 Type 4 cellulase having or comprising SEQ ID NO:6 or NO:7, GH12 Type 5 cellulase having or comprising SEQ ID NO:8 or NO:9 or a polypeptide having GH12 cellulase activity and having at least 60%, preferably 70%, more preferably at least 80%, more preferably at least 90%, still more preferably at least 95%, still more preferably at least 98% sequence identity to any of SEQ ID NOS:1 to 10, or a mixture of at least two of said cellulases.
